# EUROPÄISCHE PATENTANMELDUNG

(11) **EP 1 387 324 A2**
(43) Veröffentlichungstag der Anmeldung: **04.02.2004**
(21) Anmeldenummer: 03016638.3
(22) Anmeldetag: 30.07.2003
(51) Int. Cl.: G07C 9/00, G07C 5/00

(54) **Schliessvorrichtung für eine Tür oder eine Klappe eines Transportraumes eines Fahrzeugs**

(30) Priorität: 31.07.2002 DE 10234831
(71) Anmelder: Schmechel Transport GmbH, 23843 Bad Oldesloe (DE)
(72) Erfinder: Schmechel, Björn, 23843 Bad Oldesloe (DE)
(74) Vertreter: Patentanwälte Hauck, Graalfs, Wehnert, Döring, Siemons, Schildberg

(57) **Zusammenfassung**

Schließvorrichtung für eine Tür oder Klappe eines Laderaums eines Fahrzeugs, z.B. eines Lastkraftwagens oder Anhängers mit den folgenden Merkmalen: es ist mindestens ein Riegelelement für die Tür oder Klappe vorgesehen, das mittels einer pneumatischen Betätigungsvorrichtung betätigbar ist, eine elektronische Steuervorrichtung am LKW betätigt die Betätigungsvorrichtung, am LKW ist ein Sender/Empfänger angeordnet, der für die Kommunikation mit einem stationären Sender/Empfänger über einen Satelliten ausgelegt und mit der Steuervorrichtung verbunden ist, dem Riegelelement ist ein Sensor zugeordnet, der mit der Steuervorrichtung verbunden ist, wobei die Steuervorrichtung so ausgebildet ist, dass sie nach Maßgabe eines vorgegebenen digitalen Entriegelungssignals des Sender/Empfängers ein Öffnungs- bzw. Entriegelungssignal auf die Betätigungsvorrichtung und nach Maßgabe eines Sensorsignals ein Sendesignal auf den Sender/Empfänger gibt und ein mit einem stationären Sender/Empfänger verbundener Rechner zur Erzeugung und Überwachung eines digitalen Entriegelungssignals für den ersten Sender/Empfänger und zum Empfang eines Statussignals des Sender/Empfängers nach Maßgabe des Signals des ersten Sensors.

## Beschreibung

Die Erfindung bezieht sich auf eine Schließvorrichtung für eine Tür oder eine Klappe eines Transportraums eines Fahrzeugs, z.B. eines Lastkraftwagens (LKW) oder eines Anhängers nach dem Patentanspruch 1.

Es ist bekannt, die Position von Fahrzeugen, z.B. auch Lastkraftwagen von Transportunternehmen durch GPS (Global Position System) zu ermitteln bzw. zu verfolgen. Es ist ferner bekannt, mit Fahrzeugen von einem Standort aus über Funk zu kommunizieren. Diese Möglichkeit wird vielfach von Speditionsunternehmen genutzt, um den Fahrern kurzfristig auch über größere Strecken Weisungen erteilen zu können. Seit der Einführung des mobilen Telefons wird zumeist dessen Kommunikationsmöglichkeit verwendet.

Es ist auch bekannt, für Türen oder Klappen von Aufbauten von LKW oder Anhängern Codeschlösser vorzusehen. Dadurch soll vermieden werden, dass Unbefugte Zugang zum Laderaum erhalten und Ware entwenden. Falls der Code jedoch Dritten zugänglich geworden ist oder auch der Fahrer den Code verrät, ist keine Sicherheit mehr gegeben.

Der Erfindung liegt die Aufgabe zugrunde, eine Schließvorrichtung für eine Tür oder eine Klappe eines Transportraums eines Fahrzeugs, insbesondere eines LKW oder Anhängers zu schaffen, deren Betätigung auch dem Fahrer des LKW verwehrt werden kann.

Diese Aufgabe wird durch die Merkmale des Patentanspruchs 1 gelöst.

Bei der erfindungsgemäßen Vorrichtung ist mindestens ein Riegelelement bzw. ein Verriegelungselement für die Tür oder die Klappe des Laderaums mittels einer pneumatischen oder elektromagnetischen Betätigungsvorrichtung betätigbar. Ein pneumatisch betätigtes Schloss ist jedoch für derartige Zwecke bereits bekannt geworden.

Erfindungsgemäß ist eine elektronische Steuervorrichtung am Fahrzeug, z.B. LKW, vorgesehen zur Betätigung der Betätigungsvorrichtung. Ferner ist am Fahrzeug, z.B. LKW, ein Sender/Empfänger angeordnet, der für die Kommunikation mit einem stationären Sender/Empfänger über einen Satelliten oder eine sonstige Funkverbindung ausgelegt und mit der Steuervorrichtung verbunden ist. Das Riegelelement kann vorzugsweise bei geöffnetem Schloss ohne weiteres am Fahrzeug selbst geschlossen werden, ist jedoch im Schließzustand seinerseits verriegelt und kann nicht ohne weiteres am Fahrzeug geöffnet werden. Das Öffnen geschieht vielmehr über eine Ansteuerung der Steuervorrichtung, und zwar von einem stationären Sender aus. Erst wenn der lastwageneigene Sender/Empfänger ein entsprechendes Signal erhalten hat, gibt die elektronische Steuervorrichtung ein Signal auf die Betätigungsvorrichtung, sodass das Schloss bzw. das Riegelelement entriegelt wird. Der stationäre Sender/Empfänger ebenso wie der lastwageneigene Sender/Empfänger kann sehr einfach ausgeführt sein, da für die Betätigung des Schlosses bzw. seiner Entriegelung ein relativ einfaches digitales Signal erforderlich ist. Eine sonstige aufwändige Signalübertragung findet in der Regel nicht statt, insbesondere keine Daten oder Sprachübertragung, was einen höheren apparativen Aufwand erfordern würde.

Erfindungsgemäß ist ferner dem Riegelelement ein Sensor zugeordnet, der die Betätigung des Riegelelements bzw. seine Position überwacht und dessen Ausgangssignal ebenfalls auf die elektronische Steuervorrichtung gegeben wird. Die Steuervorrichtung ist darüber hinaus so ausgebildet, dass es ohne weiteres möglich ist, ein entsprechend dem Ausgang des Sensors gebildetes Signal vom Sender/Empfänger des LKW über Satellit auf den stationären Sender/Empfänger zu übertragen. Auf diese Weise ist es auch möglich, in zeitlichen Intervallen den Status des Schlosses abzufragen, genauer den Status des Riegelelements, d.h. ob es offen oder geschlossen bzw. seine Verriegelung aufgehoben ist oder besteht. Diese Abfrage kann entweder von einer Software des Rechners beim stationären Sender/Empfänger erfolgen oder auch von einer Software der elektronischen Steuervorrichtung, deren Ausgang dann von Zeit zu Zeit ein Signal über den LKW-eigenen Sender/Empfänger auf den stationären Sender/Empfänger überträgt.

Die erfindungsgemäße Vorrichtung verwehrt dem Fahrer eines Lastkraftwagens den Zutritt zur Ladung. Dieser ist erst möglich, wenn stationär ein entsprechendes Entriegelungssignal in Gang gesetzt worden ist. Dies geschieht z.B. von der Zentrale eines Speditionsunternehmens aus. Wird dennoch auf andere Weise das Schloss geöffnet, dann kann dies entweder durch die periodische Abfrage festgestellt werden oder auch dadurch, dass das Auftreten eines entsprechenden Sensorsignals verglichen wird damit, ob ein Entriegelungssignal abgegeben wurde. Ist dies nicht der Fall, dann kann mit Hilfe der elektronischen Steuervorrichtung über den LKW-eigenen Sender/Empfänger oder des stationären Rechners ein Alarmsignal auf den stationären Sender/Empfänger gegeben oder an dessen Ort erzeugt werden.

Falls aus irgendwelchen Gründen dem Fahrer Zugang zur Ladung gewährt werden muss und die drahtlose Übertragung des Entriegelungsbefehls nicht möglich ist oder nicht gewünscht wird, sieht eine Ausgestaltung der Erfindung vor, dass der Steuervorrichtung eine Codeeingabevorrichtung zugeordnet ist derart, dass die Betätigungsvorrichtung das Riegelelement entriegelt, wenn ein vorgegebener Code eingegeben worden ist. Vor Abfahrt wird von einer autorisierten Person das Codeschloss mit einem vorgegebenen Code versehen, der dem Fahrer nicht bekannt ist. Nimmt der Fahrer Kontakt mit der Zentrale auf, dann kann ihm dieser Code z.B. per Mobiltelefon mitgeteilt werden. Er kann dann nach Eingaben des Codes das Schloss öffnen und somit Zugang zum Inneren des Laderaums erhalten. Es kann zweckmäßig sein, diesen Zugang zu verzögern, wenn z.B. die Gefahr besteht, dass Dritte durch Mithören oder dergleichen Kenntnis von dem übermittelten Code erhalten. Daher sieht eine Ausgestaltung der Erfindung vor, dass der Steuervorrichtung oder der Codeeingabevorrichtung ein Zeitglied zugeordnet ist, das bei Erzeugung eines Entriegelungssignals dieses eine vorgegebene Zeit zurückhält.

Der in der Steuervorrichtung gespeicherte Code kann geändert werden. Diese Änderung kann ebenfalls vom stationären Sender/Empfänger stattfinden. Die Steuervorrichtung ist dann entsprechend auszubilden.

Nach einer anderen Ausgestaltung der Erfindung kann der Tür oder der Klappe ein zweiter Sensor zugeordnet sein, der ein zweites Sensorsignal erzeugt, wenn die Tür oder Klappe geöffnet wird. Der zweite Sensor ist ebenfalls mit der Steuervorrichtung verbunden. Wird z.B. durch Manipulation die Sicherheitsvorkehrung der erfindungsgemäßen Schließvorrichtung außer Kraft gesetzt, kann noch durch den zweiten Sensor erkannt und durch Alarmgabe mitgeteilt werden, dass der Laderaum unbefugt geöffnet wurde. Die Steuervorrichtung ist so ausgelegt, dass eine solche Alarmgabe unterdrückt wird, wenn das zweite Sensorsignal zeitlich annähernd mit einem über Satelliten oder Codeeingabe erzeugten Entriegelungssignal zusammenfällt.

Die erfindungsgemäße Schließvorrichtung kann pneumatisch betätigt sein. Es ist bekannt, Bremsen und andere Aggregate bei Lastkraftwagen pneumatisch zu betätigen. Bei der erfindungsgemäßen Vorrichtung ist es jedoch zweckmäßig, zur Betätigung des Schlosses einen separaten Druckluftbehälter vorzusehen. Er kann zum Beispiel unmittelbar an der Unterseite der Plattform angebracht und mit dem Schloss über eine Leitung verbunden sein.

Darüber hinaus ist nach einer weiteren Ausgestaltung der Erfindung das Schloss so ausgebildet, dass es auch dann manuell nicht geöffnet werden kann, wenn der Luftdruck abfällt oder gegen Null geht.

Die Erfindung wird nachfolgend anhand eines in Zeichnungen dargestellten Ausführungsbeispiels näher erläutert.
- Fig. 1: zeigt schematisch ein Sattel-Aufliegerfahrzeug mit einer Vorrichtung nach der Erfindung.
- Fig. 2: zeigt ein Blockschaltbild der Vorrichtung nach der Erfindung.

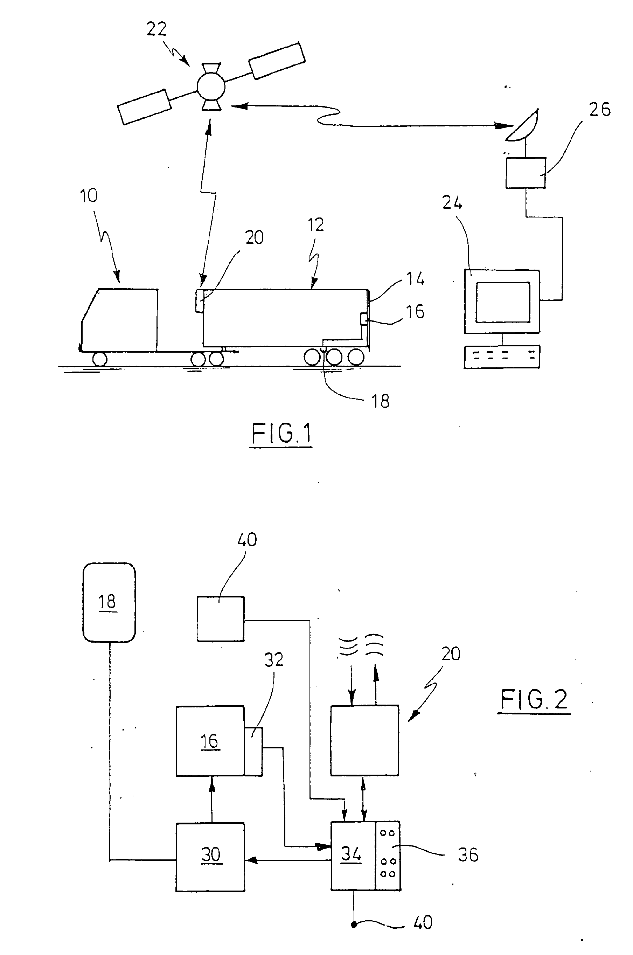

In Fig. 1 ist ein LKW 10 mit einem Auflieger 12 dargestellt, wie zum Transport vielfach eingesetzt. Auf den besonderen Aufbau muss hier nicht eingegangen werden.

Der Auflieger 12 weist hinten eine Klappe oder eine Tür auf, die allgemein mit 14 bezeichnet ist. Sie ist mit Hilfe eines nur schematisch dargestellten Schlosses 16 verriegelbar. Das Schloss wird betätigt durch einen separaten Druckluftbehälter 18, der an der Unterseite der Plattform des Aufliegers angebracht ist.

Am Auflieger 12 ist ferner auch ein Sender/Empfänger 20 angebracht, der äußerst einfach aufgebaut ist, worauf weiter unten noch eingegangen wird. Der Sender/Empfänger kann über einen Satelliten 22 mit einem Rechner 24 an einem festen Ort (z.B. Zentrale des Fuhruntemehmens) kommunizieren, und zwar über einen Sender/Empfänger 26. Die gezeigte Anordnung soll eine Schließvorrichtung für den Auflieger 12 bilden. Diese ist in Fig. 2 in Form eines Blockschaltbildes schematisch näher dargestellt.

Der Druckluftbehälter 18 ist mit einer pneumatischen Betätigungsvorrichtung 30 verbunden, mit deren Hilfe das Schloss 16 entriegelt werden kann. Die Verriegelung des Schlosses 16 wird nicht erörtert. Sie kann z.B. manuell , indirekt pneumatisch oder über Fembetätigung erfolgen. Falls die Verriegelung pneumatisch erfolgt, kann das auch mit Hilfe der Betätigungsvorrichtung 30 erfolgen, was jedoch im Einzelnen nicht dargestellt ist. Auch der Aufbau des Schlosses soll hier im Einzelnen nicht erörtert werden. Er weist mindestens ein Riegel- oder Verriegelungselement auf, das mit einer Ausnehmung oder einem Hinterschnitt oder dergleichen am Auflieger 12 zusammenwirkt. Das Riegelelement bzw. der verriegelnde Teil des Schlosses 16 wird von einem Sensor 32 überwacht. Der Sensor 32 ist mit einer elektronischen Steuervorrichtung 34 in Verbindung, die auch ein Entriegelungssignal auf die Betätigungsvorrichtung 30 gibt, damit die Betätigungsvorrichtung 30 das Riegelelement in die Offenstellung bringt. Der Steuervorrichtung 34 ist eine Codeeingabevorrichtung 36 zugeordnet derart, dass die elektronische Steuervorrichtung 34 ein Entriegelungssignal auf die Betätigungsvorrichtung 30 gibt, wenn der zutreffende Code eingegeben worden ist. Die Art des Codes und auch die Art der Eingabe spielt im vorliegenden Zusammenhang keine Rolle. Wesentlich ist, dass es möglich ist, einen beliebigen Code einzugeben, den der Fahrer des Lastzuges nicht kennt, dessen spätere Eingabe, wie bereits beschrieben, das Entriegelungssignal bewirkt. Die Speicherung des Codes kann geändert werden, und zwar auch über die beschriebene Satelliten-Überrtragungsstrecke. Zu diesem Zweck muss die Steuervorrichtung entsprechend eingerichtet sein.

Mit der elektronischen Steuervorrichtung 34 ist der Sender/Empfänger 20 verbunden. Der Sender/Empfänger 20 gibt ein vom Sender/Empfänger 26 erhaltenes Entriegelungssignal auf die Steuervorrichtung 34, die dann die Entriegelung des Schlosses 16 in bereits beschriebener Weise einleitet. Mit Hilfe des Sensors 32 kann die Entriegelung quittiert werden, da der Sensor dies feststellt und ein entsprechendes Signal auf die Steuervorrichtung 34 übermittelt. Diese kann dann ein Signal über den Sender/Empfänger 20 auf den stationären Sender/Empfänger 26 und den Rechner 24 übertragen.

Mit Hilfe des Sensors 32 ist auch möglich, den Status des Schlosses 16 intervallmäßig abzufragen. Hierzu kann eine entsprechende Software in der Steuervorrichtung 34 vorgesehen werden, die in zeitlichen Abständen ein Statussignal über die beschriebene Kommunikationsstrecke sendet. Umgekehrt kann im Rechner 24 von Zeit zu Zeit ein Abfrageprogramm über die beschriebene Kommunikationsstrecke ablaufen, um den Status des Sensors bzw. des Riegelelements bzw. des Schlosses ermitteln.

Ein zweiter Sensor 40 stellt fest, ob die Tür oder die Klappe geschlossen ist. Ist dies nicht der Fall, gibt er ein Signal auf die Steuervorrichtung 34. Diese kann dann ebenfalls ein Signal auf den stationären Sender/Empfänger 26 bzw. den Rechner 24 geben, das als Alarm gewertet wird, falls nicht zeitnah ein Entriegelungssignal erzeugt wurde. Auch das Ansprechen des Sensors 32 in einem zeitlichen Rahmen, in dem kein Entriegelungssignal auftaucht, ist als Alarmsignal zu werten und kann ohne Zeitverzögerung auf die Zentrale übertragen werden.

Der Steuervorrichtung 34 ist ein Temperaturfühler 40 zugeordnet, der im Laderaum angeordnet ist. Er ermöglicht eine intervallmäßige Statusabfrage sowie eine Alarmgabe über die beschriebene Kommunikationsstrecke, falls eine Abweichung von vorgegebenen Werten gemessen wird.

Wie schon erwähnt, kann über die Blöcke 34, 30 unmittelbar eine Betätigung des Riegelelements vorgenommen werden. Die Betätigung kann jedoch von der Entriegelung getrennt werden, d.h. das Riegelelement lässt sich öffnen, sobald seine Verriegelung gelöst worden ist. In diesem Fall kann z.B. durch die Betätigung einer Handhabe ein pneumatisches Öffnen des Schlosses erfolgen.

## Patentansprüche

1. Schließvorrichtung für eine Tür oder Klappe eines Laderaums eines Fahrzeugs, z.B. eines Lastkraftwagens oder Anhängers mit den folgenden Merkmalen:
- es ist mindestens ein Riegelelement für die Tür oder Klappe vorgesehen, das mittels einer pneumatischen oder elektromagnetischen Betätigungsvorrichtung (30) betätigbar ist,
- eine elektronische Steuervorrichtung (34) am LKW betätigt die Betätigungsvorrichtung (30),
- am LKW ist ein Sender/Empfänger (20) angeordnet, der für die Kommunikation mit einem stationären Sender/Empfänger (26) oder eine sonstige Funkverbindung über einen Satelliten (22) ausgelegt und mit der Steuervorrichtung (30) verbunden ist,
- dem Riegelelement ist ein Sensor (32) zugeordnet, der mit der Steuervorrichtung (30) verbunden ist,
- wobei die Steuervorrichtung (30) so ausgebildet ist, dass sie nach Maßgabe eines vorgegebenen digitalen Entriegelungssignals des Sender/Empfängers (20) ein Öffnungs- bzw. Entriegelungssignal auf die Betätigungsvorrichtung (30) und nach Maßgabe eines Sensorsignals ein Sendesignal auf den Sender/Empfänger (20) gibt und
- ein mit einem stationären Sender/Empfänger (26) verbundener Rechner (24) zur Erzeugung und Überwachung eines digitalen Entriegelungssignals für den ersten Sender/Empfänger (20) und zum Empfang eines Statussignals des Sender/Empfängers (20) nach Maßgabe des Signals des ersten Sensors (32).

2. Vorrichtung nach Anspruch 1, **dadurch gekennzeichnet, dass** der Steuervorrichtung (34) eine Codeeingabevorrichtung (36) zugeordnet ist derart, dass die Betätigungsvorrichtung (30) das Riegelelement entriegelt, wenn ein vorgegebener Code eingegeben wird.

3. Vorrichtung nach Anspruch 1 oder 2, **dadurch gekennzeichnet, dass** der Tür oder Klappe ein zweiter Sensor (40) zugeordnet ist, der ein zweites Sensorsignal erzeugt, wenn die Tür oder Klappe geöffnet wird und der zweite Sensor (40) mit der Steuervorrichtung (34) verbunden ist.

4. Vorrichtung nach einem der Ansprüche 1 bis 3, **dadurch gekennzeichnet, dass** das Schloss (16) so ausgebildet ist, dass es in der Verriegelungsstellung bleibt, wenn die pneumatische oder elektrische Versorgung (18) ausfällt.

5. Vorrichtung nach einem der Ansprüche 1 bis 4, **gekennzeichnet durch** eine Ausbildung der Software des Rechners (24) oder der Software der elektronischen Steuervorrichtung (34) derart, dass in zeitlichen Intervallen eine Abfrage des Sensors (32) erfolgt.

6. Vorrichtung nach einem der Ansprüche 1 bis 5, **gekennzeichnet durch** einen separaten Druckluftbehälter (18) für die Betätigungsvorrichtung (30).

7. Vorrichtung nach einem der Ansprüche 2 bis 6, **dadurch gekennzeichnet, dass** der Codeeingabevorrichtung (36) bzw. der Steuervorrichtung (34) ein Zeitglied zugeordnet ist, das die Erzeugung eines Entriegelungssignals eine vorgegebene Zeit verzögert.

8. Vorrichtung nach einem der Ansprüche 2 bis 7, **dadurch gekennzeichnet, dass** der in der Steuervorrichtung (34) gespeicherte Code über Signale vom stationären Sender/Empfänger (22) geändert werden kann.

9. Vorrichtung nach einem der Ansprüche 1 bis 8, **dadurch gekennzeichnet, dass** mit der Steuervorrichtung (34) ein im Laderaum angeordneter Temperaturfühler (40) verbunden ist zur Übertragung von Temperaturwerten an den stationären Sender/Empfänger (22) oder eines Alarmsignals bei Abweichung von einem vorgegebenen Temperaturwert.
